(19) Europäisches Patentamt
European Patent Office
Office européen des brevets

(11) **EP 0 924 926 B1**

(12) **EUROPEAN PATENT SPECIFICATION**

(45) Date of publication and mention
of the grant of the patent:
**11.08.2010   Bulletin 2010/32**

(51) Int Cl.:
*H04N 3/16* *(2006.01)*       *H04N 3/26* *(2006.01)*
*H04N 5/257* *(2006.01)*      *H03K 4/69* *(2006.01)*
*H04N 3/227* *(2006.01)*

(21) Application number: **98310466.2**

(22) Date of filing: **18.12.1998**

(54) **Deflection system**

Ablenkungssystem

Système de déflection

(84) Designated Contracting States:
**DE FR GB**

(30) Priority: **19.12.1997   GB 9726964**

(43) Date of publication of application:
**23.06.1999   Bulletin 1999/25**

(73) Proprietor: **BRIMAR LIMITED**
**Middleton,**
**Manchester M24 1SN (GB)**

(72) Inventors:
• **Cotton, John Richard**
**Bamford,**
**Hope Valley S33 OBU (GB)**

• **Bowden, Robin Michael**
**West Kirby L48 8BH (GB)**

(74) Representative: **Beresford, Keith Denis Lewis et al**
**Beresford & Co.**
**16 High Holborn**
**London**
**WC1V 6BX (GB)**

(56) References cited:
**EP-A- 0 556 035      US-A- 4 023 069**
**US-A- 4 289 994      US-A- 4 456 856**

**Description**

This invention relates to an electron beam deflection system. The invention has particular, although not exclusive, relevance to an electron beam deflection system for a cathode ray tube.

In cathode ray tubes the position of the electron beam on the phosphor screen is controlled by the current flowing through a deflection coil, the current being effective to create a magnetic field which deflects the beam. In order to scan the beam across the phosphor screen of the cathode ray tube in a raster scan pattern, a linear ramping current is passed through the deflection coil, the centre of the ramp corresponding to the undeflected beam position being at zero Amps.

At the end of each linear scan, it is necessary to rapidly reverse the direction of current flow through the deflection coil to bring the beam back to its starting point before commencing the next scan. Rapid flyback of the beam is conventionally achieved by use of a flyback capacitor, which is switched in series with the deflection coil during the flyback period, to produce a resonant circuit with the deflection coil with a period of oscillation of twice the flyback period. The energy in the deflection coil at the end of the raster scan is transferred to the flyback capacitor in the first quarter cycle of the resonant oscillations. Subsequent discharge of the capacitor in the second quarter cycle and transfer of the electrical energy back to the deflection coil enables the required rapid reversal of the current through the deflection coil during the flyback period.

One application of a cathode ray tube is as a flying spot scanner in a telecine scanner which is used to transfer the information in a cinematographic film onto video tape. The cathode ray tube is used to scan successive frames of the film in a raster scan, light from the cathode ray tube which passes through successive regions of each frame being measured and used to produce a video signal. In contrast to a cathode ray tube for a television system, in which the raster scan is synchronised with synchronisation pulses in the input signal, the flying spot scanner uses a deflection amplifier, whose input signal is a voltage waveform, the amplifier providing a deflection current through the deflection coil which is proportional to the voltage waveform input to the deflection amplifier. In contrast to a cathode ray tube for a television system, this waveform may be distorted to provide correction of the position of the electron beam for, for example, optical distortions in the optical system.

EP-A-0556035 discloses a deflection system for driving an electron beam in a raster scan for use in a flying spot telecine scanner. The deflection coil is energized by a linear amplifier whose inputs comprise a scanning voltage signal, a DC offset generator and a feedback signal from the deflection coil so as to provide current through the deflection coil which is proportional to the input voltage signal during each forward scan period and which may be offset by a shift provided by the DC offset generator. A flyback capacitor in series with the deflection coil forms a resonant circuit with the deflection coil during each flyback period, so as to cause resonant flyback of the current through the deflection coil at the end of each scan period, the flyback capacitor being shorted out by a switching means during the forward scan periods.

With the advent of high definition television (HDTV), there is a requirement to be able to transfer films onto video tape in the HDTV format. This involves scanning the film transparencies at approximately twice the speed of earlier telecine machines.

In particular, in such applications it is required that the flyback time at the end of each raster scan line is very fast as this effectively causes dead time within the scan time.

It is known to incorporate a boost circuit to speed up the flyback action in a deflection system. US-A-4456856 discloses one such deflection system including a boost circuit connected across the deflection coil, the boost circuit being connected to a high voltage source. At the initiation of flyback, a voltage peak is sensed by a Darlington pair and a signal is generated effective to switch the boost circuit from a passive to an active configuration. In the active configuration, current passes from the high voltage source to a boost capacitor connected across the deflection coil. When the potential across the boost capacitor exceeds the potential across the deflection coil, current flows from the boost capacitor through the deflection coil. Such an arrangement has a disadvantage however that it is necessary to provide a high voltage source, a gating means such as a Darlington pair, and a boost capacitor connected in parallel across the deflection coil in order to produce the required current flow at the required time during the flyback period.

It is an object of the present invention to provide a deflection system wherein the above problems of the prior art arrangements are at least alleviated.

According to the present invention there is provided a deflection system for driving an electron beam in a raster scan comprising a succession of forward scan periods, successive forward scan periods being separated by respective flyback periods, the system comprising: a deflection coil; a scanning voltage generating circuit effective to produce a scanning voltage signal; an energising circuit for the deflection coil comprising a linear amplifier whose inputs comprise said scanning voltage signal and a feedback signal from the deflection coil so as to provide current through the deflection coil which is proportional to the input voltage signal during each forward scan period; a flyback capacitor in series with the deflection coil, the flyback capacitor forming a resonant circuit with the deflection coil during each flyback period so as to cause resonant flyback of the current through the deflection coil; and switching means connected across the flyback capacitor, the switching means being effective to short out the flyback capacitor during the forward scan periods, the deflection system being characterised in comprising a current boost circuit including a constant current source which is connected by an unswitched direct current path to the flyback capacitor, to inject current of the constant current source into the resonant circuit such that the energy in the flyback capacitor at the end of the first quarter cycle of the resonant oscillation of the flyback period is equal to the energy in the deflection coil at the start of the flyback period.

In an embodiment of the deflection system, the constant current source is connected to continuously inject current into the resonant circuit.

A number of embodiments of the invention will now be described by way of example only with reference to the accompanying Figures in which:

Figure 1 is a schematic circuit diagram of a deflection system exhibiting a delay in the flyback action;

Figure 2 illustrates the deflection current flowing through the deflection coil of the circuit of Figure 1;

Figure 3 is an equivalent circuit to the resonant flyback circuit in the circuit of Figure 1;

Figure 4 illustrates the current waveform flowing in the equivalent circuit shown in Figure 3 demonstrating energy losses with time;

Figure 4B illustrates the corresponding voltage through the flyback capacitor in the equivalent circuit shown in Figure 3;

Figure 5 is a schematic circuit diagram of a first embodiment of the present invention;

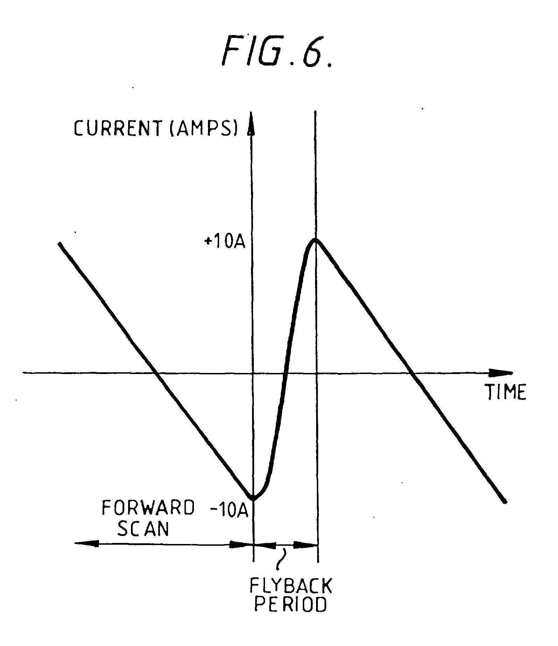

Figure 6 illustrates the deflection current waveform in the circuit of Figure 5;

Figure 7 is a schematic circuit diagram of a second embodiment of the present invention;

Figure 8 shows the waveforms at various points in the circuit of Figure 7 with no DC shift applied;

Figure 9 shows schematically the corresponding waveforms to those of Figure 7 with a positive applied offset voltage;

Figure 10 shows schematically the corresponding waveforms to those of Figure 7 with a negative applied offset voltage; and

Figure 11 is a schematic diagram of a telecine system incorporating a cathode ray tube system acting as a flying spot light source including a deflection system according to an embodiment of the invention.

The following description of a comparative example of a deflection system gives further details of the way in which the completion of flyback may be delayed, thus increasing the total scan time.

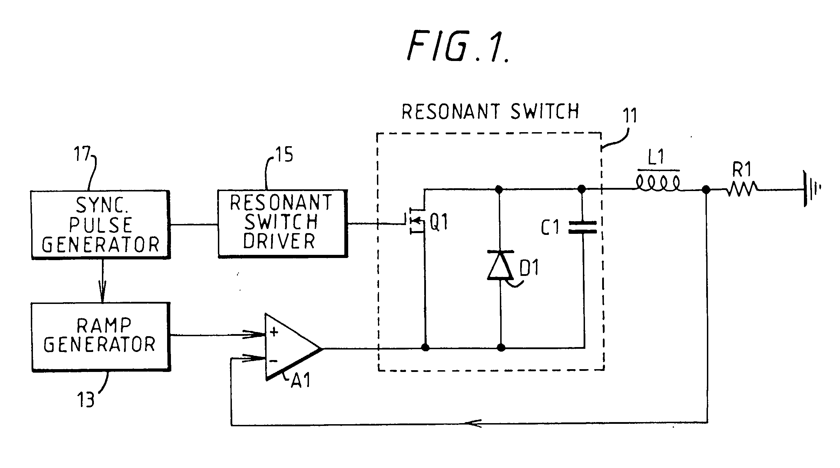

Referring to Figure 1, this Figure illustrates a deflection system for controlling the electron beam deflection in a cathode ray tube by control of the current through a deflection coil L1. The deflection coil L1 is connected to the output of a deflection amplifier A1 with a resonant switch circuit 11 (to be described in more detail later) interposed between the deflection amplifier A1 and the input of the deflection coil L1. The other end of the deflection coil L1 is connected to earth through a current sensing resistor R1, a voltage feedback loop from the deflection coil L1 being provided to one input of the deflection amplifier A1. The other input of the deflection amplifier is connected to a ramp generator 13 effective to produce a sawtooth voltage waveform.

The resonant switch circuit 11 comprises a switch Q1 in the form of a MOSFET, a flyback capacitor C1 and a diode D1 connected in parallel with the switch Q1 and the flyback capacitor C1. The switch Q1 is controlled by a resonant switch driver circuit 15 which is in turn clocked by a sync pulse generator 17 which also controls the timing of the sawtooth voltage waveforms produced by the ramp generator 13.

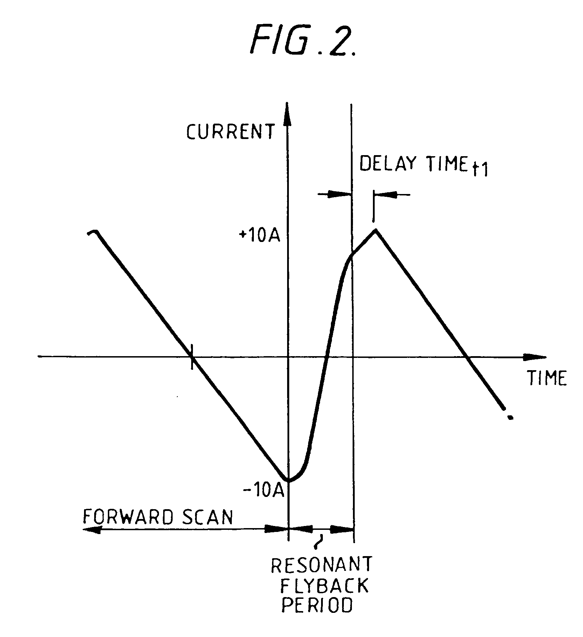

Referring now also to Figure 2, in use of the deflection circuit during the forward scan period the switch Q1 is closed thus shorting out the flyback capacitor C1. Due to the feedback loop, the current flowing through the deflection coil L1 will be proportional to the ramp voltage provided by the ramp generator 13. Thus the amplifier drives the deflection coil L1 to produce the current ramp indicated in the forward scan portion indicated in Figure 2, the current starting at 10 Amps passing through 0 and eventually reaching -10 Amps in the particular example shown, although any suitable current values can be chosen dependent on the sensitivity of the deflection coil L1.

At the time at which the current through the deflection coil L1 is at -10 Amps, the switch Q1 is switched off and the deflection coil L1 will start to discharge into the flyback capacitor C1. The resonant circuit L1, C1 will oscillate at a frequency fr where

$$f_r = \frac{1}{2\pi\sqrt{L_H \, C_r}} \qquad (1)$$

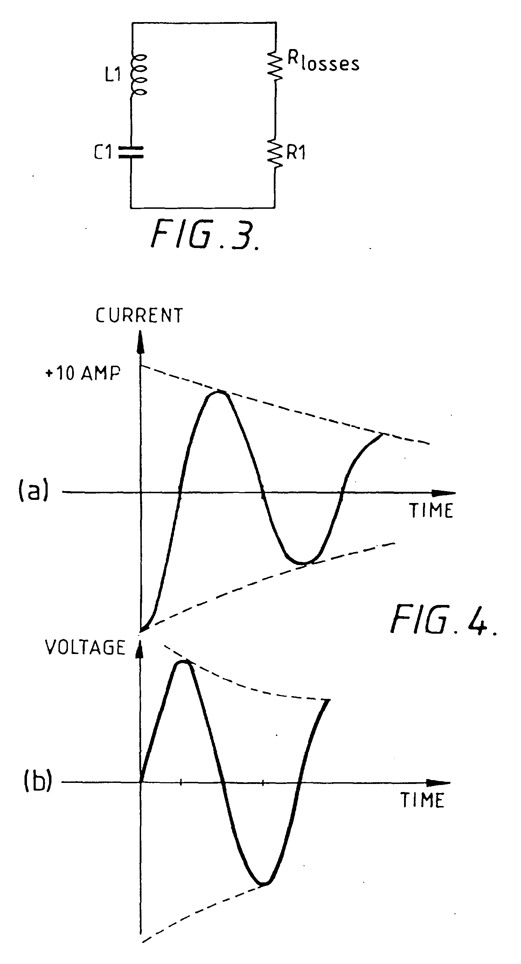

where $L_H$ is the inductance of the deflection coil L1 and $C_r$ is the capacitance of the flyback capacitor C1. The value $C_r$ is thus chosen to give the desired flyback time. The equivalent circuit for the resonant circuit is indicated in Figure 3.

Referring now also to Figures 4A and 4B, at the start of the flyback period all the energy will be in the deflection coil L1. This energy, E, is given by the value

$$E = \tfrac{1}{2}L_H I_D{}^2 \qquad (2)$$

where $I_D$ is the current flowing through the deflection coil L1.

At the end of the first quarter cycle the energy will be transferred to the flyback capacitor C1, ignoring resistive losses the energy $E^1$ being given by

$$E^1 = \tfrac{1}{2}C_r V_D{}^2 \qquad (3)$$

where $V_D$ is the voltage across the flyback capacitor.

At the end of the second quarter cycle the energy will be returned to the deflection coil L1 with the current reversed.

The diode D1 is arranged such that it will start to conduct at the end of the first half cycle, thus shorting out the flyback capacitor C1 and preventing further oscillations. The switch Q1 is turned back on during the beginning of the next scan period thus taking over the function of the diode D1. However as indicated in Figure 4, due to losses in the resonant circuit produced by the resistance and skin effect of the windings of the deflection coil L1, iron losses, induced current in the coil core, and any adjacent components, dielectric losses in the capacitor C1 and the resistance of the feedback resistor R1, the oscillations of the resonant circuit will be damped. Thus the current flowing through the deflection coil L1 will not reach the initial value of 10 Amps but some lower value. This attenuation of the current waveform will be corrected by the current flowing through the amplifier A1.

The inventors of the present invention have realised that a scan current waveform through the deflection coil L1 proportional to the input voltage waveform used to drive the deflection amplifier A1 cannot be achieved until the current flowing through the deflection coil L1 has reached the scan start value, i.e. 10 Amps in this example. The period for which the deflection amplifier A1 has to replenish the current causes a delay, $t_1$ in Figure 2, before the electron beam can reach its start position in the next scan period.

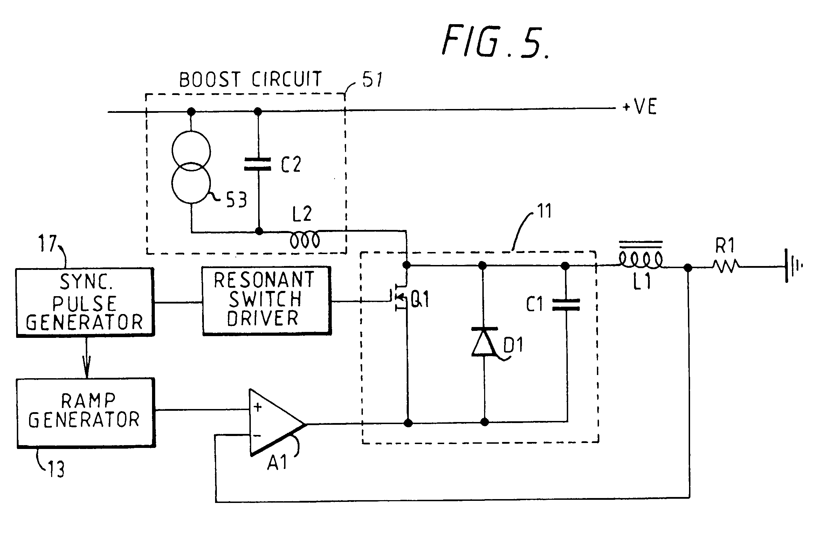

In order to at least alleviate the above problem in the circuit illustrated in Figure 1, in accordance with an embodiment of the invention there is provided a boost circuit to reduce the time tl in Figure 2 and thus enable a shorter overall flyback period. Figure 5 illustrates a deflection system including such a circuit. As the circuit of Figure 5 is a modification of the circuit of Figure 1, in Figure 5 all components corresponding to those in the arrangement of Figure 1 are correspondingly labelled.

Referring now to Figure 5, the boost circuit 51 is designed to inject direct current into the resonant switch circuit 11 during resonant flyback, so as to increase the voltage $V_D$ across the flyback capacitor C1 as set out in equation (3) above such that the energy $E^1$ in the flyback capacitor C1 at the end of the first quarter cycle of the resonant oscillations is equal to the energy E in the deflection coil as defined in equation (2) above.

The boost circuit 51 comprises a constant current source 53 in parallel with a capacitor C2. The parallel arrangement of the capacitor and constant current source 53 is connected to the resonant switch circuit 11 via an inductor L2. The capacitor C2 is chosen to have a value effective to provide a low impedance at the frequency of the raster scan, thus reducing modulation of the voltage across the current source by any AC ripple current which has passed through the inductor L2. The inductor L2 on the other hand is chosen to have a value such that it is effective to provide AC voltage isolation between the constant current source 53 and the high voltage developed across the flyback capacitor C1 during flyback, i.e. at the resonant frequency fr given by equation (1). This voltage can be up to several hundred volts. The inductor L2 preferably has a value of a minimum of 10 times the inductance of the deflection coil L1 but typically has a value of 100 times the inductance of the deflection coil L1. These values are found to minimise the effect of ripple current produced by the flyback circuit on the constant current supply.

The amplitude of the current to be provided by the boost circuit will depend on many factors such as the frequency of the scan, and the losses in the resonant circuit as discussed above. Typically the constant current source will be arranged to produce a current of 0.25 Amps. The current produced by the boost circuit will be slightly modulated by the AC voltage across the inductor L2 during discharge of the flyback capacitor L1. However the current from the boost circuit in conjunction with the resonant current produced by the resonant circuit comprising the flyback capacitor L1 and the deflection coil L1 will be effective to cause the flyback capacitor C1 to be fully charged at the end of the first quarter cycle of the oscillations of the resonant switch circuit 11. Subsequent discharge of the flyback capacitor C1 through the deflection coil L1, together with the 0.25 Amp DC current flow, will ensure the current through the deflection coil L1 will reach +10 Amps at the end of the second quarter cycle of the oscillations of the resonant switch circuit before the diode D1 starts conducting and the forward raster scan recommences. The overall time taken for the scan is thus reduced.

The constant current source 53 may take any suitable form. One possibility is an adjustable voltage regulator LM317 produced by National Semiconductor (and many others) with a sensor resistor connected between the output pin and the adjustment pin. The load is taken from the adjustment pin, the regulator trying to maintain a voltage drop across the sensor resistor equal to its internal reference. This will enable a constant current output to be produced.

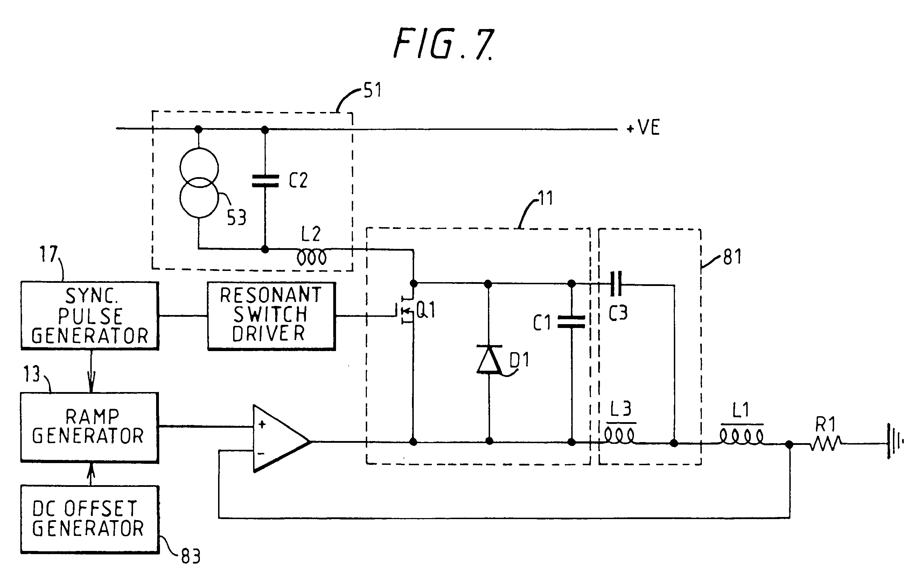

Turning now to Figure 7, this circuit is an adaptation of the circuit of Figure 5 with an additional shift circuit 81 being added to enable a DC offset voltage to be superimposed on the scanning voltage waveform in order to shift the position of the scan on the phosphor screen of the cathode ray tube included during the flyback period. Again equivalent components in Figure 7 to those in the earlier Figures are correspondingly labelled.

The DC offset voltage to be superimposed on the scanning voltage waveform is provided by DC offset generator 83. The shift circuit 81 is designed to enable the resonant flyback to operate despite the DC offset voltage and comprises an energy storage inductor L3 and a DC blocking capacitor C3. The inductor L3 provides a low frequency path for the scan current from the deflection amplifier A1 to the deflection coil L1 and the current sensing resistor R1.

The DC blocking capacitor C3 causes all the offset current produced by the DC offset generator 83 to flow through the inductor L3. The inductance of L3 is chosen to be greater than the inductance of the deflection coil L1 so as to have a high impedance at the raster scanning frequency of the ramp generator 13. Typically the inductance of L3 will be about 10 times that of the deflection coil L1. The majority of the sawtooth waveform current produced by the amplifier A1 will therefore flow through the capacitor C3 which has a relatively high capacitance, for example in the order of 10 $\mu$F.

When the diode D1 starts conducting at the start of the forward scan period the effect of the parallel combination of the capacitor C3 and the coil L3 will be a small voltage drop. Thus the energy storage circuit 81 will have little effect during the forward scan time, and the required DC offset current will be simply superimposed on the ramp current.

At the end of the forward scan time, when the switch Q1 is opened, any offset current flowing will continue to flow through the inductor L3. As current from the deflection coil L1 flows towards the resonant flyback capacitor C1 the current charging the flyback capacitor C1 will be reduced by the oppositely flowing offset current. When the combination of the current from the deflection coil L1 and the current from the boost circuit 51 falls to the value of the offset current, the flyback capacitor C1 will stop charging altogether. Eventually the discharging current from the flyback capacitor C1 will exceed the value of the offset current, thus reversing the direction of current flow through the deflection coil L1. The diode D1 will start to conduct and the forward scan will recommence at a current value determined by the value of the offset current.

Thus the circuit 81 comprising the capacitor C3 and inductor L3 will act as an energy storage circuit during flyback to reduce the effect of the offset current during flyback. The inductor L3 acts as a substantially constant current path during flyback, passing a current proportional to the DC offset voltage applied to the amplifier A1, In particular, the inductor L3 will pass a current equivalent to the DC offset current in the first quarter cycle of the flyback oscillations so as to subtract that current from the current charging the flyback capacitor C1. In the second quarter cycle of the flyback oscillations the inductor L3 will effectively subtract the offset current from the discharge current from C1 passing into the deflection coil L1.

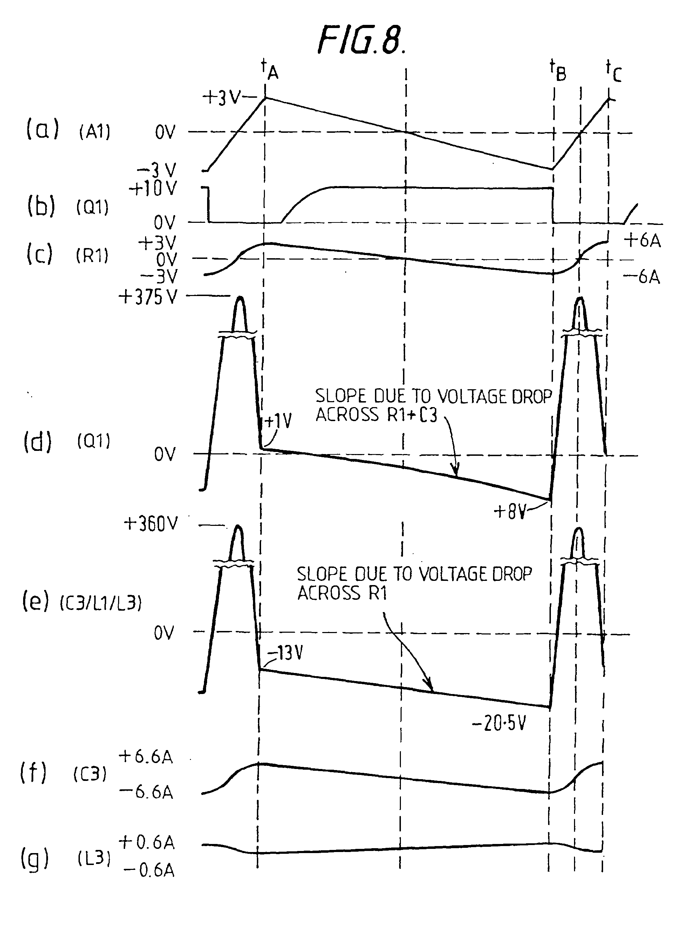

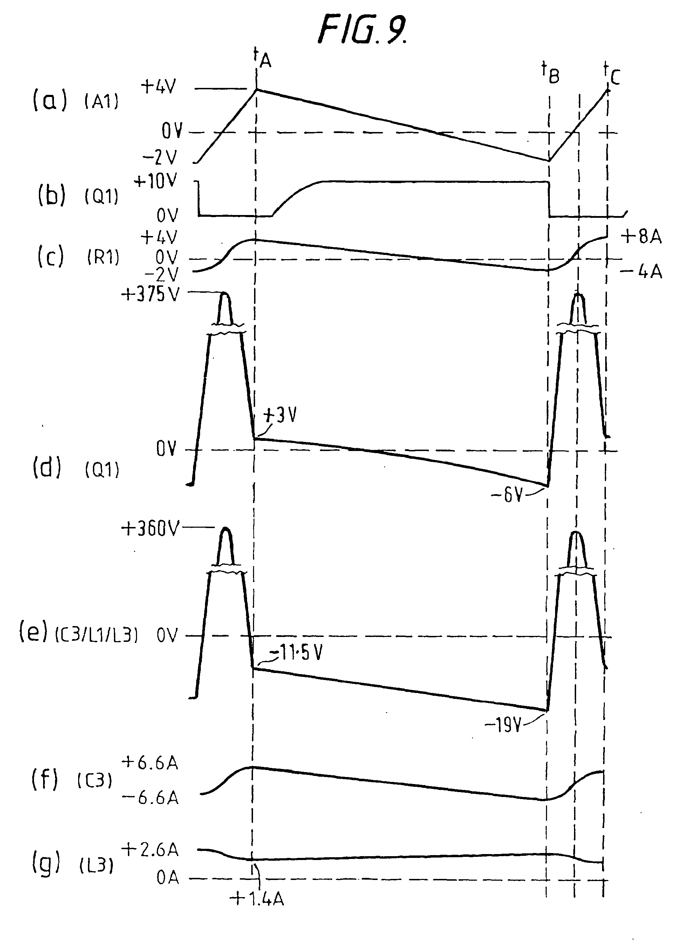

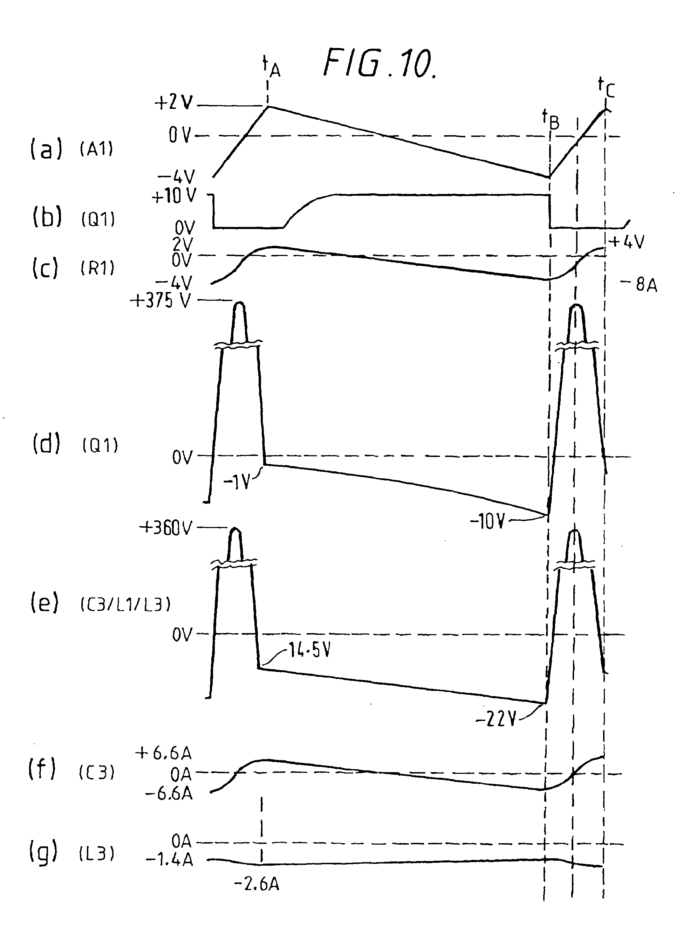

Referring now to Figures 8, 9 and 10, these Figures illustrate the various current and voltage waveforms in the circuit of Figure 7. Figure 8 illustrates the waveforms when no offset current is applied to the input of the amplifier A1. Figure 9 illustrates the corresponding waveforms when an offset voltage is applied to the amplifier such that a positive 2 Amp DC offset current is produced in the deflection coil L1. Figure 10 illustrates the corresponding waveforms when a negative 2 Amp DC offset voltage is produced in the deflection coil L1. In each of the waveforms shown in Figures 8, 9 and 10 the period between $t_A$ and $t_B$ is the forward scan period, with the resonant flyback period being between $t_B$ and $t_C$.

In this particular example, a ramp voltage of between +3V and -3V is applied to the input of the deflection amplifier A1, this being arranged to produce a deflection current of between +6 Amps and -6 Amps. In each of Figures 8, 9 and 10, waveform (a) is the ramp sawtooth voltage waveform applied to the input of the amplifier A1 with the appropriate offset voltages superimposed in Figures 9 and 10. The voltage waveform (b) is the gate-source voltage on MOSFET switch Q1. The voltage waveform (c) is the resultant voltage across the current sensing resistor R1. Voltage waveform (d) represents the voltage waveform on the drain of the MOSFET switch Q1 relative to ground. The voltage waveform (e) illustrates the voltage at the junction of C3, L1 and L3 relative to ground. The current waveform (f) illustrates the current waveform through capacitor C3. Finally, current waveform (g) illustrates the current waveform through inductor L3. In each of the cases illustrated in Figures 8, 9 and 10 the boost circuit 51 will be effective to inject current into the flyback capacitor C1 to enable the capacitor C1 to be fully charged at the end of the first quarter cycle of the oscillations of the resonant circuit C1, L1. Discharge of the flyback capacitor C1 together with the DC current from the boost circuit 51 will in an equivalent manner to the first embodiment ensure that the current through the deflection coil L1 reaches the appropriate ramp start value.

It will be appreciated that where such a shift circuit is incorporated in order to enable a DC offset voltage to be superimposed in the scanning voltage waveform, the boost circuit is particularly beneficial in reducing the time before the amplifier A1 is able to produce a current waveform proportional to the scanning input voltage. Further details of shift circuits for enabling DC offset currents to be applied in deflection amplifier circuits employing resonant flyback are described in our corresponding application EP-A-0556035.

It will be appreciated that whilst in the above examples, a sawtooth waveform is used to drive the deflection amplifier, other scanning waveforms may be used. In particular a non-linear S corrected ramp waveform may be used for correcting for the profile of the cathode ray tube face plate.

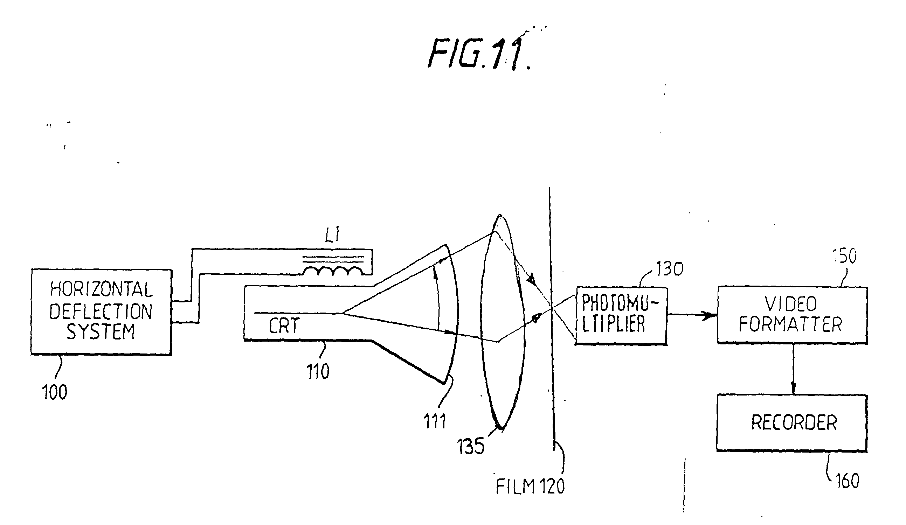

Figure 11 illustrates a deflection system in accordance with an embodiment of the invention forming part of a cathode ray tube system in a telecine system. For the sake of simplicity a monochrome system is shown. It will be appreciated however that usually telecine systems are receptive to multicolour light beams, for example red, green and blue and will incorporate suitable beam splitters. The deflection system constitutes the horizontal deflection system for a cathode ray tube such that the magnetic field caused by the current through the deflection coil L1 adjusts the horizontal position of the beam of the cathode ray tube 110 on the phosphor screen 111. A vertical deflection system (not shown) is also provided to adjust the vertical position of the beam on the screen. Light passing from the cathode ray tube is focused on a film transparency 120 by a lens 135 and is collected by a photomultiplier 130. The output of the photomultiplier is applied to a video formatter 150, where output is a video signal which is recorded in recorder 160.

Whilst a deflection system in accordance with the invention finds particular application in a flying spot scanner for a telecine application, a deflection system in accordance with the invention can be used in other applications, for example a Head Up Display, a flight simulation, or a video projector in which complicated input voltage waveforms may be used to compensate for optical aberrations in the optical system in conjunction with very short flyback times.

**Claims**

1. A deflection system for driving an electron beam in a raster scan comprising a succession of forward scan periods, successive forward scan periods being separated by respective flyback periods, the system comprising:

   a deflection coil (L1);
   a scanning voltage generating circuit (13) effective to produce a scanning voltage signal;
   an energising circuit for the deflection coil (L1) comprising a linear amplifier (A1) whose inputs comprise said scanning voltage signal and a feedback signal from the deflection coil (L1) so as to provide current through the deflection coil (L1) which is proportional to the scanning voltage signal during each forward scan period;
   a flyback capacitor in series with the deflection coil (L1), the flyback capacitor (C1) forming a resonant circuit with the deflection coil (L1) during each flyback period so as to cause resonant flyback of the current through the deflection coil (L1)and
   switching means (11) connected across the flyback capacitor (C1), the switching means (Q1,15,17) being effective to short out the flyback capacitor (C1) during the forward scan periods,
   the deflection system being **characterised in** comprising a current boost circuit (51) including a constant current source (53) which is connected by an unswitched direct current path to the flyback capacitor (C1), to inject current of the constant current source into the resonant circuit such that the energy in the flyback capacitor (C1) at the end of the first quarter cycle of the resonant oscillation of the flyback period is equal to the energy in the deflection coil at the start of the flyback period.

2. A deflection system according to claim 1 in which the current boost circuit (51) comprises an AC voltage isolation means (L2) for providing AC voltage isolation of the current boost circuit (51) from the switching means (11) during the flyback period.

3. A deflection system according to claim 2 wherein the AC voltage isolation means comprises an inductive means (L2).

4. A deflection system according to claim 1 or 2 including means (C2) for short circuiting any AC current flowing into the current boost circuit (51).

5. A deflection system according to claim 4 wherein said short circuiting means is a capacitor (C2) in parallel with the constant current source (53).

6. A deflection system according to any of the preceding claims including shift means (83, 81) for enabling a DC offset current to be applied through the deflection coil (L1) so as to offset the scan and flyback positions of the electron beam.

7. A deflection system according to claim 6 in which said switching means (11) include the flyback capacitor (C1), and the shift means (83, 81) includes means (L3) for decoupling the DC offset current from the flyback capacitor (C1) during resonant flyback.

8. A deflection system according to any one of the preceding claims in which the switching means (11) includes a transistor switching means (Q1) effective to initiate resonant flyback at the end of each line of the raster scan.

9. A deflection system according to any one of the preceding claims in which the current boost circuit (51) is arranged to be powered by a voltage supply to the linear amplifier (A1).

10. A deflection system according to any one of the preceding claims wherein the constant current source is connected to continuously inject a constant current into the resonant circuit.

11. A cathode ray tube system including an electron beam deflection system according to any one of the preceding claims.

**Patentansprüche**

1. Ablenksystem zum Steuern eines Elektronenstrahls in einer Rastertastung mit einer Folge von Vorwärtstastperioden, wobei aufeinanderfolgende Vorwärtstastperioden durch zugehörige Rückspringperioden getrennt sind, wobei das System aufweist:

   eine Ablenkspule (L1);
   eine Tastspannungserzeugungsschaltung (13) zum Erzeugen eines Tastspannungssignals;
   eine Anregungsschaltung für die Ablenkspule (L1) mit einem Linearverstärker (A1), dessen Eingangssignale das Tastspannungssignal und ein Feedbacksignal von der Ablenkspule (L1) aufweisen, so dass Strom durch die Ablenkspule (L1) geliefert wird, der proportional zu dem Tastspannungssignal während jeder Vorwärtstastperiode ist;
   einen Rückspringkondensator in Serie mit der Ablenkspule (L1), wobei der Rückspringkondensator (C1) einen Resonanzschaltkreis mit der Ablenkspule (L1) während jeder Rückspringperiode bildet, so dass ein resonantes Zurückspringen des Stroms durch die Ablenkspule (L1) während jeder Rückspringperiode bewirkt wird; und
   eine Schalteinrichtung (11), die über den Rückspringkondensator (C1) angeschlossen ist, wobei die Schalteinrichtung (Q1, 15, 17) dazu ausgelegt ist, den Rückspringkondensator (C1) während der Vorwärtstastperioden kurzzuschließen,

   **gekennzeichnet durch** eine Stromverstärkungsschaltung (51), die eine Konstantstromquelle (53) aufweist, die **durch** einen ungeschalteten Gleichstrompfad an den Rückspringkondensator (C1) angeschlossen ist, um Strom der Konstantstromquelle in den Resonanzschaltkreis einzuspeisen, so dass die Energie in dem Rückspringkondensator (C1) am Ende des ersten Viertelzyklus des Resonanzschwingkreises der Rückspringperiode gleich groß ist wie die Energie in der Ablenkspule zu Beginn der Rückspringperiode.

2. Ablenksystem nach Anspruch 1, in dem die Stromverstärkungsschaltung (51) eine Wechselspannungstrenneinrichtung (L2) aufweist, um eine Wechselspannungstrennung der Stromverstärkungsschaltung (51) von der Schalteinrichtung (11) während der Rückspringperiode zu bewirken.

3. Ablenksystem nach Anspruch 2, wobei die Wechselspannungstrenneinrichtung eine Induktionseinrichtung (L2) aufweist.

4. Ablenksystem nach Anspruch 1 oder 2, mit einer Einrichtung (C2) zum Kurzschließen jeglichen Wechselstroms, der in die Stromverstärkungsschaltung (51) fließt.

5. Ablenksystem nach Anspruch 4, wobei die Kurzschlusseinrichtung ein Kondensator (C2) in Parallelschaltung mit der Konstantstromquelle (53) ist.

6. Ablenksystem nach einem der vorstehenden Ansprüche mit einer Verschiebe-Einrichtung (83, 81), die dazu ausgelegt ist, einen durch die Ablenkspule (L1) anzulegenden Offset-Gleichstrom zu ermöglichen, um die Tast- und Rückspringpositionen des Elektronenstrahls zu versetzen.

7. Ablenksystem nach Anspruch 6, in dem die Schalteinrichtung (11) den Rückspringkondensator (C1) aufweist, und die Verschiebe-Einrichtung (83, 81) eine Einrichtung (L3) zum Entkoppeln des Offset-Gleichstroms von dem Rückspringkondensator (C1) während des resonanten Zurückspringens aufweist.

8. Ablenksystem nach einem der vorstehenden Ansprüche, in dem die Schalteinrichtung (11) eine Transistorschalteinrichtung (Q1) aufweist, die dazu ausgelegt ist, resonantes Zurückspringen am Ende jeder Rastertastzeile auszulösen.

9. Ablenksystem nach einem der vorstehenden Ansprüche, in dem die Stromverstärkungsschaltung (51) dazu ausgelegt ist, durch eine Spannungsversorgung zu dem Linearverstärker (A1) mit Leistung versorgt zu werden.

10. Ablenksystem nach einem der vorstehenden Ansprüche, wobei die Konstantstromquelle dazu angeschlossen ist, kontinuierlich einen konstanten Strom in den Resonanzschaltkreis einzuspeisen.

11. Kathodenstrahlröhrensystem mit einem Elektrodenstrahlablenksystem gemäß einem der vorstehenden Ansprüche.

**Revendications**

1. Système de déviation pour diriger un faisceau électronique en un balayage de trames comprenant une succession de périodes de balayage avant, les périodes de balayage avant successives étant séparées par des périodes de balayage de retour de faisceau respectives, le système comprenant :

    un enroulement de déviation (L1);
    un circuit de génération de tension de balayage (13) destiné à produire un signal de tension de balayage ;
    un circuit d'excitation pour l'enroulement de déviation (L1), comprenant un amplificateur linéaire (A1) dont les entrées comprennent ledit signal de tension de balayage et un signal de rétroaction de l'enroulement de déviation (L1) de façon à produire un courant à travers l'enroulement de déviation (L1), celui-ci étant proportionnel au signal de tension de balayage durant chaque période de balayage avant ;
    un condensateur de retour de faisceau en série avec l'enroulement de déviation (L1), le condensateur de retour de faisceau (C1) formant un circuit résonnant avec l'enroulement de déviation (L1) durant chaque période de retour de faisceau de façon à provoquer un retour de faisceau résonnant du courant à travers l'enroulement de déviation (L1) ; et
    des moyens de commutation (11) connectés aux bornes du condensateur de retour de faisceau (C1), les moyens de commutation (Q1, 15, 17) étant destinés à court-circuiter le condensateur de retour de faisceau (C1) durant les périodes de balayage avant,
    le système de déviation étant **caractérisé en ce qu'**il comprend un circuit de renforcement de courant (51) comprenant une source de courant constant (53) qui est connectée par un trajet de courant continu non commuté au condensateur de retour de faisceau (C1), de façon à injecter un courant de la source de courant constant dans le circuit résonnant, de telle sorte que l'énergie dans le condensateur de retour de faisceau (C1) à la fin du premier quart de cycle de l'oscillation résonnante de la période de retour de faisceau soit égale à l'énergie dans l'enroulement de déviation au début de la période de retour de faisceau.

2. Système de déviation selon la revendication 1, dans lequel le circuit de renforcement de courant (51) comprend des moyens d'isolement de tension alternative (L2) pour assurer un isolement en tension alternative du circuit de renforcement de courant (51) vis-à-vis des moyens de commutation (11) durant la période de retour de faisceau.

**3.** Système de déviation selon la revendication 2, dans lequel les moyens d'isolement de tension alternative comprennent des moyens inductifs (L2).

**4.** Système de déviation selon la revendication 1 ou 2, comprenant des moyens (C2) pour court-circuiter tout courant alternatif circulant dans le circuit de renforcement de courant (51).

**5.** Système de déviation selon la revendication 4, dans lequel lesdits moyens de court-circuit sont un condensateur (C2) en parallèle avec la source de courant constant (53).

**6.** Système de déviation selon l'une quelconque des revendications précédentes, comprenant des moyens de décalage (83, 81) pour permettre à un courant de décalage en courant continu d'être appliqué à travers l'enroulement de déviation (L1) de façon à décaler les positions de balayage et de retour de faisceau du faisceau électronique.

**7.** Système de déviation selon la revendication 6, dans lequel lesdits moyens de commutation (11) comprennent un condensateur de retour de faisceau (C1), et les moyens de décalage (83, 81) comprennent des moyens (L3) pour découpler le courant de décalage en courant continu à partir du condensateur de retour de faisceau (C1) durant le retour de faisceau résonnant.

**8.** Système de déviation selon l'une quelconque des revendications précédentes, dans lequel les moyens de commutation (11) comprennent des moyens de commutation à transistor (Q1) efficaces pour déclencher un retour de faisceau résonnant à la fin de chaque ligne du balayage de trame.

**9.** Système de déviation selon l'une quelconque des revendications précédentes, dans lequel le circuit de renforcement de courant (51) est configuré de façon à être alimenté par une alimentation en tension de l'amplificateur linéaire (A1).

**10.** Système de déviation selon l'une quelconque des revendications précédentes, dans lequel la source de courant constant est connectée de façon à injecter en continu un courant constant dans le circuit résonnant.

**11.** Système de tube cathodique comprenant un système de déviation de faisceau d'électrons selon l'une quelconque des revendications précédentes.

FIG.1.

RESONANT SWITCH

17 SYNC. PULSE GENERATOR

15 RESONANT SWITCH DRIVER

11

L1

R1

Q1

D1

C1

RAMP GENERATOR

13

A1

EP 0 924 926 B1

# FIG.2.

CURRENT

DELAY TIME t1

+10A

-10A

FORWARD SCAN

TIME

RESONANT
FLYBACK
PERIOD

FIG.3.

FIG.4.

# FIG.5.

EP 0 924 926 B1

# FIG.6.

CURRENT (AMPS)

+10A

TIME

FORWARD
SCAN

-10A

FLYBACK
PERIOD

# FIG.7

EP 0 924 926 B1

# FIG.8.

(a) (A1)

(b) (Q1)

(c) (R1)

(d) (Q1)

SLOPE DUE TO VOLTAGE DROP
ACROSS R1+C3

+1V

+8V

(e) (C3/L1/L3)

SLOPE DUE TO VOLTAGE DROP
ACROSS R1

-13V

-20·5V

(f) (C3)

(g) (L3)

# FIG.9.

## FIG.10.

(a) (A1)

(b) (Q1)

(c) (R1)

(d) (Q1)

(e) (C3/L1/L3)

(f) (C3)

(g) (L3)

FIG.11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0556035 A

- US 4456856 A